# EUROPEAN PATENT APPLICATION

(11) **EP 1 741 766 A1**
(43) Date of publication of application: **10.01.2007**
(21) Application number: 05704330.9
(22) Date of filing: 26.01.2005
(51) Int. Cl.: C09K 17/02, C09K 17/06, C09K 17/14, C09K 17/42, C01F 5/40

(54) **SOIL SOLIDIFYING AGENT**

(30) Priority: 27.01.2004 JP 2004017914
(71) Applicant: Incorporated Administrative Agency National Agriculture and Food Research Organisation, Ibaraki 305-8517 (JP); Tobu Kagaku Kabushiki Kaisha, Satte-shi, Saitama 340-0113 (JP)
(72) Inventor: FUJIMORI, Shinsaku, Tsukuba-shi, Ibaraki 3058609 (JP); KOBORI, Shigeji, c/o Tobu Kagaku Kabushiki Kaisha, Satte-shi, Saitama 3400113 (JP)
(74) Representative: Eddowes, Simon
(86) International application number: PCT/JP2005/001432
(87) International publication number: WO 2005/071041

(57) **Abstract**

A neutral soil solidifying agent that ensures excellent water resistance and strength, having no adverse influence on environment. There is provided a soil solidifying agent comprising as an active ingredient a neutral anhydrous magnesium oxysulfate prepared by first adding 1 mol of concentrated sulfuric acid to 3 to 5 mol of magnesium oxide under agitation and thereafter conducting a reaction at 105°C or higher.

## Description

### Technical Field

The present invention relates to a soil-solidifying agent, exhibiting liquid property, having a pH range of 6.5 to 8.5 defined as environmental standards. In the description of the present invention, a "neutral pH range" includes a general neutral pH range of 6.5 to 8.0 and a weak basic pH range of 8.0 to 8.5, taking into account the above shown environmental standards.

### Background Art

In handouts of a workshop of the Society of Inorganic Materials held in September of 1994, research trends of gypsum, lime, and cement were discussed, and research and development of unburned cement was proposed as an energetically and environmentally important factor. However, a novel product leading to environmental improvements replacing conventional products in gypsum, lime, and cement industries has not appeared since then to this day.

A typical example of the unburned cement is gypsum, and gypsum is widely used in building materials or industrial materials, utilizing its property of curing in a neutral pH range. Examples of other known unburned cement include self-curing lime, anhydrous gypsum cement, magnesia cement, magnesium oxide/magnesium sulfate cement, zinc oxide/zinc chloride cement, magnesium phosphate cement, calcium phosphate cement, iron powder/magnesium chloride cement, calcium aluminate/calcium fluoride cement, dental cement, water-granulated slag/gypsum cement, acrylate/divalent to trivalent alkali metal cement, acid proof cement, silica sol cement, and a carbonation cured material composed of magnesium oxide and olefin carbonate disclosed in JP-B 2563468.

Of those, gypsum, anhydrous gypsum cement, and silica sol cement solidify in a neutral pH range. Zinc oxide/zinc chloride cement, magnesium phosphate cement, calcium phosphate cement, iron powder/magnesium chloride cement, and dental cement cure in an acidic pH range. Self-curing lime, magnesia cement, magnesium oxide/magnesium sulfate cement, calcium aluminate/calcium fluoride cement, water-granulated slag/gypsum cement, acrylate/divalent to trivalent alkali metal cement, and acid proof cement cure in an alkali pH range. All unburned cement except dental cement has poor water resistance. Much unburned cement has poor physical properties compared to those of portland cement and is expensive, and thus is not suitable for practical use.

Meanwhile, waste gypsum is decomposed by sulfophilic bacteria, recently causing a pollution problem of hydrogen sulfide generation. Thus, gypsum needs to be disposed at a controlled disposal site, and a disposal fee of gypsum exceeds a raw material cost of gypsum, which is an inexpensive material. In addition, cement and lime are widely used for their properties of curing with relative ease, but each of them has a high pH of 14 and must be disposed after neutralization. Thus, a cost of acid required for neutralization is large, and an existing substance except gypsum which cures in a neutral pH range has been searched. A cured material having no water solubility and having high water resistance is particularly desired for civil engineering fields and applications where animals and plants interact with each other directly. An inexpensive substance which has physical properties and safety comparable to those of ordinary cement and which can be used widely and economically is desired.

An example of a cured material classified as unburned cement includes oxychloride cement, and magnesium sulfate is used as a water resistant additive. Further, JP-A 10-316967 discloses cement composed of a solution of magnesium oxide and magnesium sulfate. Furthermore, a mixture of magnesium sulfate and magnesium oxide is used as a readily available magnesium fertilizer. However, all of them are lowly evaluated as cement from the viewpoints of water resistance and strength, and domestic demands therefor are low.

### Disclosure of the Invention

Under such circumstances, a neutral solidifying agent with excellent water resistance and strength and without adverse environmental effects is demanded as a soil-solidifying agent. In addition, a substance which is an existing chemical substance and which is abundant as a resource, easily available, and easily produced is required.

The inventors of the present invention have conducted studies over a long period of time, and have noted that basic magnesium oxysulfate is synthesized through a hydrothermal synthesis method and that magnesium hydroxide or magnesium oxide, and magnesium sulfate are raw materials for the synthesis. Further, the inventors of the present invention have noted that a product of the hydrothermal synthesis has a pH of about 8 . 5 and conceived that amorphous anhydrous magnesium oxysulfate having no water of crystallization can be synthesized through a simple synthesis method, and have studied a synthesis method of amorphous anhydrous magnesium oxysulfate except the hydrothermal synthesis method.

After being devoted to further research and development, the inventors of the present invention have found that neutral amorphous magnesium oxysulfate is produced by mixing magnesium oxide and magnesium sulfate and heating the mixture at 105°C or higher, and that neutral amorphous magnesium oxysulfate can also be obtained by directly reacting sulfuric acid with magnesium oxide. Thus, the inventors of the present invention have completed the present invention.

That is, the present invention relates to a soil-solidifying agent including as an active ingredient neutral anhydrous magnesium oxysulfate prepared by adding 1 mole of concentrated sulfuric acid to 3 to 5 moles of magnesium oxide while stirring and reacting them at a reaction temperature of 105°C or higher.

Further, the present invention relates to a soil-solidifying agent including as an active ingredient neutral anhydrous magnesium oxysulfate prepared by adding 1 mole of magnesium sulfate to 3 to 5 moles of magnesium oxide and reacting them with heat at 105°C or higher.

Further, the present invention relates to a soil-solidifying agent composition, obtained by adding 2 to 15 parts by weight of gypsum and 0.5 to 10 parts by weight of ketocarboxylic acid or oxycarboxylic acid as a setting retarder to 100 parts by weight of the aforementioned neutral anhydrous magnesium oxysulfate.

Further, the present invention provides use of the aforementioned neutral anhydrous magnesium oxysulfate as a soil-solidifying agent, or a method of solidifying soil with the aforementioned neutral anhydrous magnesium oxysulfate.

The present invention relates to: novel neutral anhydrous magnesium oxysulfate in place of gypsum which solidifies in a neutral pH range; a soil-solidifying agent containing neutral magnesium oxysulfate/magnesium phosphate as a main raw material; and a soil-solidifying agent composition having an appropriate pot life by adding gypsum or adding as a setting retarder such as ketocarboxylic acid or oxycarboxylic acid as means for obtaining an appropriate setting time. The thus-obtained hydraulic composition has water resistance unlike gypsum, high strength, high thermal resistance, and early-strength comparable to alumina cement. Further, the hydraulic composition is inexpensive and has favorable soil solidifying properties and a chelating ability which contributes to stabilization of heavy metals. Thus, the hydraulic composition is a novel environmentally-friendly solidifying agent.

Further, sulfuric acid necessary for flue-gas desulfurization is not demanded so much. The present invention suitably enables applications of flue-gas gypsum with a soil-solidifying agent of the present invention. Combined with application of unused resources such as serpentine, the present invention has a large significance.

### Detailed Description of the Invention

Hereinafter, the present invention will be described in detail. The inventors of the present invention have conducted studies on a method of efficiently producing neutral anhydrous magnesium oxysulfate as described above, and have found that various useful anhydrous magnesium oxysulfates can be obtained by using 3 to 5 moles of magnesium with respect to 1 mole of sulfuric acid, that a reaction temperature must be 105°C or higher, and that heating is required for initiating a reaction. The method provides a stable anhydrous coordination compound unlike a conventional magnesium oxide/magnesium sulfate mixture prepared by reacting magnesium oxide and magnesium sulfate in solution. Then, the compound is hydrated. The chemically-synthesized hydrated compound of anhydrous magnesium oxysulfate, unlike a conventional hydrated mixture, has physical properties of excellent strength and water resistance.

Further, the inventors of the present invention have discovered that, as to reaction equivalents of magnesium oxide to sulfuric acid, a reaction product from magnesium sulfate of mol:mol to 1 to 4 moles of magnesium oxide to 1 mole of sulfuric acid provides a neutral reaction product; and 5 moles of magnesium oxide to 1 mole of sulfuric acid provides a weak alkali reaction product of pH 8.5 (as described above, the neutral pH range includes a pH of 8.5 in the description of the present invention) . Meanwhile, the inventors of the present invention have found that: 1 to 2 moles of magnesium oxide with respect to 1 mole of sulfuric acid provides water-soluble anhydrous magnesium sulfate having no curing properties; and 2 or more moles of magnesium oxide with respect to 1 mole of sulfuric acid provides a salt which has no solubility in water, has curing properties, and solidifies even with low water resistance. Thus, the inventors of the present invention have discovered that a practical cured material must contain 3 or more moles of magnesium oxide with respect to 1 mole of sulfuric acid. The discovery enabled production of a solidifying agent having a pH range of 6.5 to 8.5 defined as environmental standards, which was hardly produced through conventional techniques.

In the present invention, magnesium oxide is basically used as a raw material. Any magnesium mineral, hydroxide or oxide containing 15% or more magnesium can be used as a magnesium source being an inexpensive resource. Examples thereof include serpentine, peridotite, zungan, enstatite, forsterite, talc, magnesium hydroxide, basic magnesium carbonate, and magnesium oxide. Two or more types of them can be used as a mixture.

As reaction conditions, a reaction temperature of 105°C or higher is required for obtaining an anhydride directly. Examples of a method of obtaining the anhydride include: a method of synthesizing an anhydride through heating of the raw materials or through heat generation by reaction heat of sulfuric acid; and a method of heating a hydrated reaction product to 105°C or higher. That is, synthesis conditions vary according to raw materials, and when the raw material has water of crystallization or when diluted sulfuric acid is used, a reaction product must be dried by heating or water content must be removed from a reaction system as steam using heat generation during a reaction.

Further, when magnesium sulfate is used as a source of sulfuric acid, magnesium hydroxide, basic magnesium carbonate, or magnesium oxide must be used as a raw material, and heating is necessary since a reaction does not involve heat generation. However, heating is not necessary when sulfuric acid is used in combination. In the reaction method, a synthesis product having a different molar ratio, as given, must be adjusted by reacting a predetermined amount of magnesium sulfate in advance and then adding sulfuric acid to obtain a product having a given molar ratio.

The simplest synthesis method for anhydrous magnesium oxysulfate is a method involving a direct reaction of magnesium oxide with sulfuric acid, and 4 to 5 moles of magnesium oxide preferably reacts with 1 mole of sulfuric acid. A reaction condition for providing neutral anhydrous magnesium oxysulfate is 105°C or higher, and a sulfuric acid concentration has no effect.

When basic magnesium carbonate and magnesium hydroxide are used as raw materials, a synthesis method for anhydrous magnesium oxysulfate involves: reacting a predetermined amount of sulfuric acid; calcining unreacted basic magnesium carbonate and magnesium hydroxide at 900°C or lower to convert it into magnesium oxide; and reacting it with magnesium sulfate at the same time as calcining. Magnesium sulfate decomposes at 1, 000 °C or higher, and thus attention must be paid to a calcination temperature.

When magnesium-containing mineral such as serpentine, peridotite, zungan, enstatite, forsterite, or talc is used as a raw material, two methods can be used. One method involves: directly reacting sulfuric acid with a pulverized raw material; heating the whole for terminating the reaction as required; providing an aging time for completely terminating the reaction depending on circumstances; and further reacting the obtained magnesium sulfate with magnesium oxide. Magnesium oxide used in the method is obtained by calcining serpentine, peridotite, zungan, enstatite, forsterite, or talc at 900°C or higher. Alternatively, magnesium oxide which is a calcined product of magnesium hydroxide or basic magnesium carbonate may be mixed for a reaction.

The other method involves: calcining serpentine, peridotite, zungan, enstatite, forsterite, or talc at 900°C or higher; adding a predetermined amount of sulfuric acid thereto for a reaction; and reacting unreacted magnesium oxide with the produced magnesium sulfate.

Further, as an example of use of the present invention, an anhydrous magnesium oxysulfate/magnesium phosphate mixture which is useful for stabilization of heavy metals may be used as an active ingredient for a soil-solidifying agent.

Examples of a method of obtaining the anhydrous magnesium oxysulfate/magnesium phosphate mixture include: a method involving using a mixed acid of sulfuric acid and phosphoric acid (about 70% sulfuric acid : 30% phosphoric acid), and synthesizing anhydrous magnesium oxysulfate and the anhydrous magnesium oxysulfate/magnesium phosphate mixture at the same time through a technique according to the aforementioned synthesis of anhydrous magnesium oxysulfate; a method involving using phosphorus ore and sulfuric acid; and a method involving adding acidic phosphate, pyrophosphate, heavy burned phosphorus, double-burned phosphorus, or fused phosphate as a mixture. The synthesis methods and mixture addition methods can be used according to the purpose, and a phosphate having water of crystallization may be mixed with arbitrary anhydrous magnesium oxysulfate to be synthesized in advance and the mixture may be dehydrated under heating. The resultant is heated to a reaction temperature of 100°C or higher, to thereby obtain an anhydrous product. Reaction equivalents are very moderate and similar to equivalents of the mixture, and a reaction product can be easily confirmed with loss of solubility in water.

The neutral anhydrous magnesium oxysulfate or anhydrous magnesium oxysulfate/magnesium phosphate mixture of the present invention can be use as it is as a soil-solidifying agent. However, the neutral anhydrous magnesium oxysulfate or anhydrous magnesium oxysulfate/magnesium phosphate mixture of the present invention sets very quickly in a setting time within a few minutes, has a large heat generation rate during curing, and thus may be hardly used as a general soil-solidifying agent.

In order to mitigate the problem, an effective method involves adding 2 to 15 parts by weight of gypsum and 0.5 to 10 parts by weight of ketocarboxylic acid or oxycarboxlic acid as a setting retarder with respect to 100 parts by weight of neutral anhydrous magnesium oxysulfate or anhydrous magnesium oxysulfate/magnesium phosphate mixture for adjusting a hydration time.

As a further example of the use of the present invention, gypsum may be added to a reaction system of magnesium oxide and sulfuric acid (or magnesium sulfate) to produce a neutral anhydrous magnesium oxysulfate/gypsum mixture, which is used as an active ingredient for a soil-solidifying agent.

Many attempts have been made heretofore at improving poor water resistance of gypsum solidifying in a neutral pH range. Gypsumhardly develops water resistance while maintaining physical properties inherent in gypsum. Such attempts are made less today, and slag plaster boards and the like are only products left.

The present invention can provide neutral anhydrous magnesium oxysulfate having physical properties surpassing those of the conventional soil-solidifying agent and early-strength cement (or super high early strength cement, in addition to physical properties replacing those of gypsum, in particular, physical properties of solidifying soil within a pH range defined by environmental standards. Thus, neutral anhydrous magnesium oxysulfate has a small adverse effect on living being, is highly safe with 1/60 eluate of cement, has high physical strength of Vickers hardness of 7.0, and has a 28-day compression strength of 100 N/mm² or more compared to that of portland cement. Neutral anhydrous magnesium oxysulfate can be used as an inorganic adhesive of binders of various materials, in addition to its use as a solidifying agent, and can also be used in molds, polishing materials, refractory materials, building materials, and the like.

Neutral anhydrous magnesium oxysulfate does not have disadvantages of a conventional mixture-type compound such as a mixture of light burned magnesia + phosphate, phosphate fertilizers, and carbonates for soil solidification, and has a basic structure of a coordination compound containing 3 to 5 molecules of magnesium oxide coordinated to 1 molecule of magnesium sulfate. Neutral anhydrous magnesium oxysulfate has low solubility in water, no eluviation of components during hydration, and no maldistribution of components which is likely to occur in a mixture, and thus, curing can be conducted through a hydration reaction of a compound like a solid solution.

Further, the present invention can provide a neutral anhydrous magnesium oxysulfate phosphate solidifying agent having a chelating ability of a magnesium phosphate apatite derivative through a method involving: mixing neutral anhydrous magnesium oxysulfate with various phosphates or phosphate fertilizers; or mixing neutral anhydrous magnesium oxysulfate with a mixed acid of phosphoric acid and sulfuric acid and phosphorus ore for a reaction with sulfuric acid.

Stabilization treatment of heavy metals heretofore has mainly involved cement solidification or fusion, and cement solidification involves use of cement and a chelating agent in combination. When lead and cadmium were mixed, one element was hardly stabilized because of high pH of cement, and stabilization treatment of mercury by chelating was most difficult. The property of solidifying in a neutral pH range is particularly effective for substances which produce hydroxides of heavy metals in an alkali pH range, and is very advantageous in suppressing properties of a substance which has higher solubility as a hydroxide converted from an oxide. Further, vegetation growth disorder due to high solubility of magnesium sulfate, which is a disadvantage of magnesium sulfate/magnesium oxide/phosphate mixture, can be reduced. Thus, applicability of the anhydrous magnesium oxysulfate/magnesium phosphate mixture to cadmium-polluted soil can be improved. The anhydrous magnesium oxysulfate/magnesium phosphate mixture forms a phosphate chelate with heavy metals through elution of phosphoric acid into a citric acid-soluble form during hydration. Then, the mixture forms a hydrate containing 8 molecules of water of crystallization in a mixture hydration reaction system in which a solidification reaction of phosphate apatite formed through a reaction of the phosphate chelate with magnesium oxide and a solidification reaction of a magnesium sulfate/magnesium oxide compound take place at the same time.

### Examples

Hereinafter, the present invention will be described more specifically by examples, but the present invention is obviously not limited by the examples.

### Example 1

138 parts by weight of magnesium sulfate monohydrate was mixed into 200 parts by weight of magnesium oxide (purity of 87.3%), and the mixture was heated to 110°C while stirring for a reaction involving steam generation, to thereby obtain neutral anhydrous magnesium oxysulfate at an yield of 89.6%. 10 g of the compound was dispersed in 100 cc of water for pH measurement, resulting in a pH of 8.5.

### Example 2

100 parts by weight of concentrated sulfuric acid was added to 240 parts by weight of light burned magnesia (available from Kyowa Chemical Industry Co., Ltd.) while stirring for a reaction involving heat generation, and the reaction was terminated at a reaction temperature of 120 to 140°C. An X-ray analysis confirmed that the obtained white powder was neutral anhydrous magnesium oxysulfate. The compound had the same pH as that of Example 1.

### Example 3

138 parts by weight of magnesium sulfate monohydrate was mixed into 200 parts by weight of magnesium oxide (purity of 97.3%), and the mixture was heated to 110 °C while stirring for a reaction involving steam generation, to thereby obtain neutral anhydrous magnesium oxysulfate at an yield of 96%. 32 parts by weight of concentrated sulfuric acid was gradually added to the compound for a reaction involving heat generation. The obtained powder had a pH of 7.5, and an X-ray analysis confirmed that the powder was anhydrous 5-magnesium oxysulfate.

### Example 4

100 parts by weight of concentrated sulfuric acid was gradually added to 200 parts by weight of light burned magnesia (available from Kyowa Chemical Industry Co. , Ltd.) while stirring for a reaction involving heat generation. A reaction temperature reached 120 to 140°C at which the reaction terminated. An X-ray analysis confirmed that the obtained white powder was anhydrous 5-magnesium oxysulfate. The compound had the same pH as that of Example 3.

### Example 5

100 parts by weight of concentrated sulfuric acid was gradually added to 160 parts by weight of light burned magnesia (available from Kyowa Chemical Industry Co. , Ltd.) while stirring for a reaction involving heat generation. A reaction temperature reached 120 to 130°C at which the reaction terminated. An X-ray analysis confirmed that the obtained white powder was anhydrous 4-magnesium oxysulfate . The compound had the same pH as that of Example 3.

### Example 6

100 parts by weight of concentrated sulfuric acid was gradually added to 120 parts by weight of light burned magnesia (available from Kyowa Chemical Industry Co. , Ltd.) while stirring for a reaction involving heat generation. A reaction temperature reached 120 to 130°C at which the reaction terminated. An X-ray analysis confirmed that the obtained white powder was anhydrous 3-magnesium oxysulfate. The compound had the same pH as that of Example 3.

### Comparative Example 1

100 parts by weight of concentrated sulfuric acid was gradually added to 80 parts by weight of light burned magnesia (available from Kyowa Chemical Industry Co. , Ltd.) while stirring for a reaction involving heat generation. A reaction temperature reached 120 to 130°C at which the reaction terminated. An X-ray analysis confirmed that the obtained white powder was anhydrous 2-magnesium oxysulfate. The compound had the same pH as that of Example 3.

However, 70 parts by weight of water was mixed into 100 parts by weight of the anhydrous 2-magnesium oxysulfate, and the mixture was subjected to curing after 15 minutes and to underwater curing after 7 days for 28 days. Gravimetric measurement of the resultant confirmed 2.3% weight reduction, indicating poor water resistance. The same test was conducted on the compounds obtained in Examples 1 to 6, but no weight reduction was confirmed.

### Example 7

Magnesite (basic magnesium carbonate) was pulverized into powder of 50 mesh or less. 100 parts by weight of concentrated sulfuric acid was gradually added to 548 g of the powder while stirring for a reaction involving generation of a carbon dioxide gas. The mixture was heated to 120°C after the addition of sulfuric acid, and was further heated to 850°C to terminate the reaction. An X-ray analysis confirmed that the obtained white powder was basic anhydrous 6-magnesium oxysulfate. The powder had a pH of 9.4 through the same pH measurement as that described above.

Similarly, magnesite (basic magnesium carbonate) was pulverized into powder of 50 mesh or less. 100 parts by weight of concentrated sulfuric acid was gradually added to 457 g of the powder while stirring for a reaction involving generation of a carbon dioxide gas. Then, the mixture was heated to 850°C. An X-ray analysis confirmed that the obtained white powder was anhydrous 5-magnesium oxysulfate.

Similarly, magnesite (basic magnesium carbonate) was pulverized into powder of 50 mesh or less. 100 parts by weight of concentrated sulfuric acid was gradually added to 365 g of the powder while stirring for a reaction involving generation of a carbon dioxide gas. Then, the mixture was heated to 850°C. An X-ray analysis confirmed that the obtained white powder was anhydrous 4-magnesium oxysulfate. 60 parts by weight of water was added to 100 parts by weight of the powder, and the whole was mixed, causing vigorous heatgeneration. A slurry temperature reached 100°C after 4 minutes, and the slurry solidified.

Similarly, magnesite (basic magnesium carbonate) was pulverized into powder of 50 mesh or less. 100 parts by weight of concentrated sulfuric acid was gradually added to 274 g of the powder while stirring for a reaction involving generation of a carbon dioxide gas. Then, the mixture was heated to 850°C. An X-ray analysis confirmed that the obtained white powder was anhydrous 3-magnesium oxysulfate.

### Example 8

300 parts by weight of concentrated sulfuric acid was added to 300 parts by weight of a 50-mesh pulverized product of pure serpentine for a reaction at 100°C or lower, and the mixture was left standing for 1 day. 600 parts by weight of magnesium oxide was mixed into the mixture, and the whole was heated to 110°C for a reaction for 4 hours to evaporate water content. The gray powder obtained at an yield of 82% was anhydrous 5-magnesium oxysulfate containing silica.

A solidifying agent obtained by adding 40 g of anhydrous gypsum powder and 0.2 g of anhydrous citric acid to 100 g of the anhydrous 5-magnesium oxysulfate and mixing the whole had an initial setting time of 2 hours and 45 minutes and a final setting time of 3 hours and 57 minutes. The solidifying agent had a 1-day compression strength of 5.7 N/mm² and a 28-day compression strength of 45.6 N/mm² through a test according to JIS5210.

### Example 9

300 parts by weight of concentrated sulfuric acid was added to 480 parts by weight of a 50-mesh pulverized product of pure serpentine calcined at 900°C for a reaction at 100°C or lower to produce magnesium sulfate. 560 parts by weight of calcined serpentine powder was added to the resultant for a reaction at 110°C for 3 hours to evaporate water content and terminate the reaction. The gray powder obtained at an yield of 79% was anhydrous 5-magnesium oxysulfate containing hydrated silica.

The obtained powder was pulverized to 300 mesh or less, and 60 cc of water was added to 100 parts by weight of the powder and the whole was mixed, resulting in an initial setting time of 23 minutes and a final setting time of 54 minutes at 20 °C. Powder further containing 10% anhydrous gypsum and 0.5% anhydrous citric acid added to the obtained powder had an initial setting time of 1 hour and 54 minutes and a final setting time of 2 hours and 31 minutes. The pH of the powder was 7.8.

### Example 10

200 parts by weight of 50% sulfuric acid was added to 700 parts by weight of synthetic forsterite powder while mixing for a reaction for 6 hours, and the mixture was left standing for 1 day for aging. The mixture was then heated to 110°C to evaporate water content. The obtained brown powder was pulverized into powder of 300 mesh, to thereby obtain anhydrous 5-magnesium oxysulfate containing hydrated silica.

Powder obtained by adding 10% anhydrous gypsum powder and 0.5% anhydrous citric acid to the obtained brown powder had an initial setting time of 1 hour and 24 minutes and a final setting time of 2 hours and 16 minutes. The powder had a 28-day compression strength of 44.3 N/mm² through a test according to JIS5210.

### Example 11

200 parts by weight of 50% sulfuric acid was added to 100 parts by weight of enstatite powder while stirring for a reaction at 60°C for 3 hours. The mixture was heated to 100°C to evaporate water content, and 200 parts by weight of magnesium oxide was added to the residue for a reaction at 110°C for 3 hours. The obtained brown powder was pulverized, and 10% anhydrous gypsum powder and 0.5% anhydrous citric acid were added to the powder. Then, 60 parts by weight of water was added to 100 parts by weight of the powder for a setting test, resulting in an initial setting time of 1 hour and 24 minutes and a final setting time of 2 hours and 3 minutes.

### Example 12

210 parts by weight of concentrated sulfuric acid was added to a mixture of 120 parts by weight of magnesium hydroxide (brucite) powder and 20 parts by weight of limestone for a reaction in a mixer. 400 parts by weight of magnesium oxide was added to the mixture, and the whole was heated to 110°C for a reaction for 3 hours. The reaction product was pulverized into powder of 300 mesh or less, and 0.4 part by weight of sodium 2-ketogluconate was added to 100 parts by weight of the powder. 60 parts by weight of water was added to 100 parts by weight of the powder for a setting test, resulting in an initial setting time of 1 hour and 28 minutes and a final setting time of 1 hour 37 minutes. The product had a 28-day compression strength of 54.4 N/mm² through a test according to JIS5210.

### Example 13

200 parts by weight of 50% sulfuric acid was gradually added to a mixture of 58 parts by weight of magnesium hydroxide and 120 parts by weight of magnesium oxide while stirring for a reaction. The mixture was heated to 120°C after the addition of sulfuric acid. It took 2 hours until steam generation had been completely terminated. The final temperature was 140°C. The powder was subjected to a setting test, resulting in an initial setting time of 15 minutes and 24 seconds and a final setting time of 34 minutes and 48 seconds (20°C) at W/C = 0.6. The pH of the powder was 7.4.

### Example 14

330 parts by weight of 50% sulfuric acid was added to mixed powder containing 60 parts by weight of phosphorus ore powder and 290 parts by weight of magnesium hydroxide. After 2 hours, the mixture was heated to 110°C to completely distill off water. The powder was further dried at 180°C, and pulverized into powder of 200 mesh or less. The product was a mixture of anhydrous 5-magnesium oxysulfate,calcium/magnesium phosphate,and anhydrousgypsum. 0.5 part by weight of anhydrous citric acid was added to 100 parts by weight of the powder for a setting test, resulting in an initial setting time of 1 hour and 28 minutes and a final setting time of 2 hours and 6 minutes.

Further, 7 parts by weight of the powder was added and mixed into cadmium-polluted soil (containing 3.5 ppm Cd). The results of elution after 3 months revealed that the soil had a reduced Cd concentration of 0.026 ppm.

### Example 15

250 parts by weight of magnesium oxide was mixed into 138 parts by weight of magnesium sulfate monohydrate, and the mixture was heated while stirring. 12 parts by weight of concentrated sulfuric acid was added to the mixture for a reaction involving steam generation and heat generation, and the reaction terminated after 3 hours. 70 parts by weight of heavy burned phosphorus powder, 35 parts by weight of anhydrous gypsum, and 3 parts by weight of anhydrous citric acid were added and mixed to the resultant, to thereby prepare a product. The product had an initial setting time of 1 hour and 14 minutes and a final setting time of 1 hour and 38 minutes, and had a 28-day compression strength of 44.3 N/mm² through a test according to JIS5210. The slurry had a pH of 7.6.

### Example 16

100 parts by weight of concentrated sulfuric acid was gradually added to 200 parts by weight of light burned magnesia (available from Kyowa Chemical Industry Co. , Ltd.) while stirring for a reaction involving heat generation. 12 parts by weight of 89% phosphoric acid was added to the mixture, and a reaction temperature reached 120 to 140°C at which the reaction terminated. An X-ray analysis confirmed that the obtained white powder was a mixture of anhydrous 4-magnesium oxysulfate and acidic magnesium phosphate. The mixture had the same pH as that of Example 3.

## Claims

1. A soil-solidifying agent comprising as an active ingredient neutral anhydrous magnesium oxysulfate prepared by adding 1 mole of concentrated sulfuric acid to 3 to 5 moles of magnesium oxide while stirring and reacting them at a reaction temperature of 105°C or higher.

2. A soil-solidifying agent comprising as an active ingredient neutral anhydrous magnesium oxysulfate prepared by adding 1 mole of magnesium sulfate to 3 to 5 moles of magnesium oxide and reacting them with heat at 105°C or higher.

3. A soil-solidifying agent composition, obtained by adding 2 to 15 parts by weight of gypsum and 0.5 to 10 parts by weight of ketocarboxylic acid or oxycarboxylic acid as a setting retarder to 100 parts by weight of the neutral anhydrous magnesium oxysulfate according to claim 1 or 2.

4. Use of the neutral anhydrous magnesium oxysulfate according to claim 1 or 2 as a soil-solidifying agent.

5. A method of solidifying soil with the neutral anhydrous magnesium oxysulfate according to claim 1 or 2.
